# EUROPEAN PATENT SPECIFICATION

(11) **EP 3 266 244 B1**
(45) Date of publication and mention of the grant of the patent: **24.06.2020**
(21) Application number: 15883723.7
(22) Date of filing: 05.03.2015
(51) Int. Cl.: H04W 28/26, H04W 72/12

(54) **RESOURCE ALLOCATION METHOD AND CONTROL ENTITY USING THE SAME**
RESSOURCENZUWEISUNGSVERFAHREN UND STEUEREINHEIT DAMIT
PROCÉDÉ D'ATTRIBUTION DE RESSOURCES ET ENTITÉ DE COMMANDE L'UTILISANT

(43) Date of publication of application: 10.01.2018
(73) Proprietor: Telefonaktiebolaget LM Ericsson (publ), 164 83 Stockholm (SE)
(72) Inventor: SHI, Cong, Beijing 100040 (CN); GARCIA, Virgile, Beijing 102218 (CN); LI, Gen, Beijing 100029 (CN); LIU, Jinhua, Beijing 100102 (CN)
(74) Representative: Brann AB
(86) International application number: PCT/CN2015/073701
(87) International publication number: WO 2016/138666

(56) References cited:
- EP-A1- 1 928 190
- WO-A1-2016/074215
- CN-A- 102 802 161
- CN-A- 102 869 098
- CN-A- 102 869 098
- US-A1- 2011 230 219
- US-A1- 2011 261 767

## Description

### TECHNICAL FIELD

The present disclosure generally relates to a technical field of wireless communications, and particularly to a radio resource allocation method, a control entity and an access node (AN) using the radio resource allocation method in the wireless communications.

### BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Currently, mobile communication technologies are evolving to very high frequency, larger carrier bandwidth, very high data rate and multiple heterogeneous layers. The future wireless networks (aka 5G wireless networks) are likely to be a combination of evolved 3G technologies, 4G technologies and emerging or substantially new components such as Ultra-Density Network (UDN) or Millimeter Wave Radio Access Technology (mmW-RAT).

Due to the increasing demand to enhance wireless capacity and due to lack of availability of spectrum in lower frequency range (e.g. 800 MHz - 3 GHz), the use of frequencies in 10's of GHz range are being investigated. Investigations are going on to explore high frequency bands, for instance, in the range of 30GHz, 60GHz and 98 GHz for the future wireless networks (e.g. 5G networks). Using those frequencies, a very large bandwidth of spectrum is available. This means that both an operating frequency and a bandwidth for the future wireless networks are expected to be much higher than those used in legacy wireless networks (e.g. 3G and 4G networks).

However, due to large signal attenuation with respect to path loss, the network operating over such high frequencies is supposed to cover hotspot areas with densely deployed radio ANs. Considering that such dense deployment is particularly useful to provide sufficient coverage for indoor / hot areas, it has been agreed to exploit the UDN and the mmW-RAT for the future wireless system.

To counter-balance the effect of the path loss, high gain beamforming is also expected to be a necessary feature of the future wireless networks. The use of very high frequency band allows transceivers to have a larger number of antennas. A full digital beamforming is not very practical for complexity and cost issues, directional spatial beamforming may be considered. The gain provided by beamforming allows better signal strength received at a desired user, and reduces the interference spread. The focus of beam of a radio link into a given direction can however produce localized, strong interference for a node with an omni-directional antenna, or even with a directional antenna in the same direction as the beam direction of the radio link because the directional beam may not be perfect (e.g., side lobes of the directional beam always being not very narrow, potential reflection etc.).

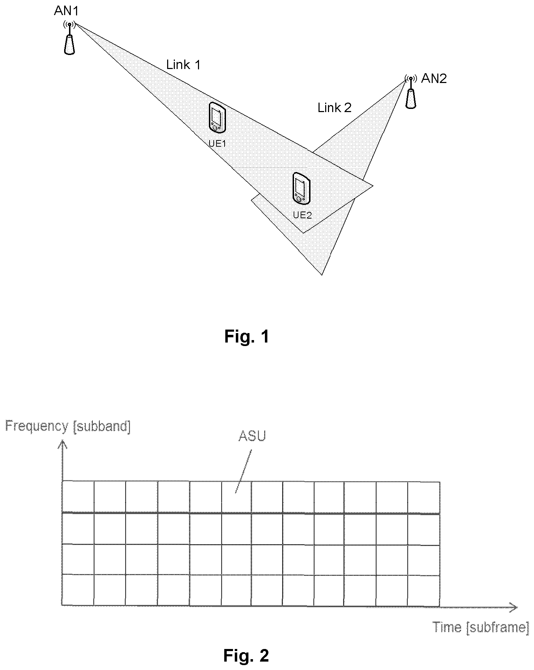

Fig. 1 illustratively shows how beam of a radio link interferes with communications on another radio link in a case of high gain beamforming.

As shown in Fig. 1, the high gain beamforming of Link 1 between UE1 and AN1 may cause strong interference in the beam direction of Link 1 with communications on Link 2 between UE2 with an omni-directional antenna or even with a directional antenna and AN2, since UE2 is also in the same direction as the beam direction of Link 1.

As well-known by the skilled in the art, a resource allocation scheme may be used in the wireless networks for avoiding interference between neighboring ANs (e.g. AN1 and AN2 in Fig. 1). Currently, the resource allocation scheme used in the legacy wireless networks for avoiding interference between the neighboring ANs is to perform resource partitioning between the neighboring ANs with so-called frequency reuse techniques, and variants thereof, such as Fractional frequency reuse, soft frequency reuse etc. However, such techniques are usually static and are common for ANs (or sectors), but are not specific to the radio link. An issue in the beamformed environment as illustrated above is that the beam of the radio link are not uniformly interfering with its neighborhood (roughly speaking: strong interference in one direction, small in others), thus the resource allocation scheme used in the legacy wireless networks are not adapted in the future wireless networks anymore. US 2011/230219 A1 describes a method of resource allocation in a wireless communication system in order to reduce inter-cell interference in the wireless communication system.

There is a need for a resource allocation solution which is well adapted for the future wireless network and is backwards compatible with the legacy wireless networks.

### SUMMARY

Accordingly, an object of the present disclosure is to provide a flexible resource allocation approach well adapted for the future wireless network and is backwards compatible with the legacy wireless networks.

In an aspect, the present disclosure provides a method in a control entity of a communication system for allocating resource to a link between an access node (AN) in communication with the control entity and a terminal device in a coverage of the AN, the method comprising:
configuring a resource allocation template for a group of links in the communication system, wherein the resource allocation template includes reserved resource for the group of links and dedicated resource for the group of links, where the reserved resource is used for satisfying resource allocation requirement, of a link in the group of links, caused by an unpredictable condition, where the unpredictable condition comprises that channel quality loss experienced by the link in the group of links exceeds a first threshold, and where a subset of the dedicated resource for the group of links is dedicated resource for a subset of the group of links and the remaining dedicated resource is dedicated resource for another subset of the group of links; and
transmitting the configured resource allocation template to an AN which serves at least one link in the group of links.

In an embodiment of the method, the resource allocation template can be configured according to link status information of respective links in the communication system among which resource coordination is required.

In an embodiment of the method, the reserved resource is allocated to a link in the group of links for satisfying the resource allocation requirement caused by the unpredictable condition, where the unpredictable condition further comprises traffic variation over the link in the group of links exceeding a second threshold; and/or occurrence of a link with no resource currently allocated thereto.

In an embodiment of the method, the group of links can be consisted of:
one or more links served by ANs in an AN cluster, or
one or more links served by an AN, or
one or more links served by a sector of an AN.

In an embodiment of the method, links in the communication system are divided into one or more groups of links, and the resource allocation template for the group of links further includes dedicated resource for other groups of links and/or shared resource for at least some of the one or more groups of links.

In an embodiment of the method, the method is performed according to a resource allocation template update cycle, within which the resource allocation template configured for the group of links is fixed.

In an embodiment of the method, the control entity is a logical entity which is implemented in one of ANs.

In another aspect, the present disclosure provides a control entity in a communication system for indicating resource to be allocated to a link between an access node (AN) in communication with the control entity and a terminal device in a coverage of the AN, the control entity comprising:
a template configuration unit configured to configure a resource allocation template for a group of links in the communication system, wherein the resource allocation template includes reserved resource for the group of links and dedicated resource
for the group of links, where the reserved resource is used for satisfying resource allocation requirement, of a link in the group of links, caused by an unpredictable condition, where the unpredictable condition comprises that channel quality loss experienced by the link in the group of links exceeds a first threshold, and where a subset of the dedicated resource for the group of links is dedicated resource for a subset of the group of links and the remaining dedicated resource is dedicated resource for another subset of the group of links; and
a transmission unit configured to transmit the configured resource allocation template to an AN which serves at least one link in the group of links.

In an embodiment of the control entity, the configuration unit configures the resource allocation template according to link status information of respective links in the communication system among which resource coordination is required.

In an embodiment of the control entity, the reserved resource is allocated to a link in the group in a case that channel quality loss experienced by the link exceeds a first threshold; and/or traffic variation over the link exceeds a second threshold; and/or the reserved resource is allocated to a link with no resource currently allocated thereto.

In an embodiment of the control entity, the group of links can be consisted of:
one or more links served by ANs in an AN cluster, or
one or more links served by an AN, or
one or more links served by a sector of an AN.

In an embodiment of the control entity, the links in the communication system are divided into one or more groups, and the resource allocation template for the group of links further includes dedicated resource for other groups of links and/or shared resource for at least some of the groups of links.

In an embodiment of the control entity, the allocation of the control entity is performed according to a resource allocation template update cycle, within which the resource allocation template configured for the group of links is fixed.

In an embodiment of the control entity, the control entity is a logical entity which is implemented in one of ANs.

In another aspect, the present disclosure provides a method in an access node (AN) of a communication system for allocating resource to a link between the access node (AN) in communication with a control entity and a terminal device in a coverage of the AN, the method comprising:
receiving from the control entity a resource allocation template for a group of links in the communication system, wherein the resource allocation template includes reserved resources for the group of links and dedicated resources for the group of links, where the reserved resource is used for satisfying resource allocation requirement, of a link in the group of links, caused by an unpredictable condition, where the unpredictable condition comprises that channel quality loss experienced by the link in the group of links exceeds a first threshold, and where a subset of the dedicated resource for the group of links is dedicated resource for a subset of the group of links and the remaining dedicated resource is dedicated resource for another subset of the group of links; and
performing resource scheduling for a respective link in the group of links served by the AN according to the resource allocation template.

In an embodiment, the method further comprises:
obtaining link status information of respective links in the group of links among which resource coordination is required; and
reporting the link status information to the control entity.

In an embodiment of the method, the step of performing resource scheduling comprises:
allocating the reserved resource to a link in the group of links for satisfying the resource allocation requirement caused by the unpredictable condition, wherein the unpredictable condition further comprises: traffic variation over the link exceeding a second threshold; and/or
occurrence of a link with no resource currently allocated thereto.

In an embodiment of the method, the group of links can be constituted by:
one or more links served by ANs in an AN cluster, or
one or more links served by an AN, or
one or more links served by a sector of an AN.

In an embodiment of the method, one or more links in the communication system are divided into one or more groups of links, and the resource allocation template further includes dedicated resource for other groups of links and/or shared resource for at least some of the one or more groups of links.

In an embodiment of the method, wherein the step of performing resource scheduling comprises:
configuring another resource allocation template for a subset of the group of links by selecting a subset of dedicated resource for the group of links as dedicated resource for a subset of the group of links and selecting the remaining dedicated resource for the group of links as dedicated resource for other subset of the group of links; and
performing resource scheduling for the respective link in the group of links according to the other resource allocation template.

In an embodiment, the method further comprises:
receiving from the control entity an updated resource allocation template for a group of links in the communication system; and
performing resource scheduling for a respective link in the group of links served by the AN according to the updated resource allocation template.

In another aspect, the present disclosure provides an access node (AN) in a communication system for allocating resource to a link between the AN in communication with a control entity and a terminal device in a coverage of the AN, comprising:
a reception unit configured to receive from the control entity a resource allocation template for a group of links in the communication system, wherein the resource allocation template includes reserved resources for the group of links and dedicated resources for the group of links; and
a resource scheduling unit configured to perform resource scheduling for a respective link served by the AN according to the resource allocation template.

In an embodiment of the AN, the reception unit is further configured to obtain link status information of respective links among which resource coordination is required, and the AN further comprises a transmission unit configured to report the link status information to the control entity.

In an embodiment of the AN, the resource scheduling unit is configured to allocate the reserved resource to a link in the group in a case that channel quality loss experienced by the link exceeds a first threshold; and/or traffic variation over the link exceeds a second threshold; and/or to allocate the reserved resource to a link with no resource currently allocated thereto.

In an embodiment of the AN, the group of links can be constituted by:
one or more links served by ANs in an AN cluster, or
one or more links served by an AN, or
one or more links served by a sector of an AN.

In an embodiment of the AN, the one or more links in the communication system are divided into one or more groups, and the resource allocation template further includes dedicated resource for other groups of links and/or shared resource for at least some of the groups of links.

In an embodiment of the AN, the resource scheduling unit further comprises a template configuration unit, configured to further configure another resource allocation template for a subset of the group of links by selecting resource from the dedicated resource for the group of links as dedicated resource for the subset of the group of links and selecting the remaining dedicated resource for the group of links as dedicated resource for other subset of the group of links, and
the resource scheduling unit performs resource scheduling for the respective link according to the other resource allocation template.

In an embodiment of the AN, the reception unit is configured to receive from the control entity an updated resource allocation template for a group of links in the communication system; and
the resource scheduling unit is configured to perform resource scheduling for a respective link according to the updated resource allocation template.

The technical solutions of the present disclosure may at least have beneficial effects as follows:
By configuring reserved resource in the resource allocation template, a flexible resource configuration may be provided in the resource allocation template fixed within a resource allocation template update cycle.

By allocating the reserved resource under any of unpredictable conditions, e.g., channel quality loss experienced by the link (e.g. exceeding a preset threshold) due to either interference caused by mobility of either the AN and/or the UE of the link, and/or new interference caused by other links without the mobility of either the AN and/or the UE of the link, traffic variation over the link (e.g. exceeding a preset threshold), occurrence of a link with no resource currently allocated thereto etc., the resource allocation requirement caused by any of the above unpredictable conditions may be satisfied.

By configuring a resource allocation template for a group of links, some functions of the control entity may be distributed to the AN(s), thus reducing complexity/burden of the control entity. Furthermore, configuring the resource allocation template locally at the AN enables resource configuration to be performed more quickly with more precise local knowledge than the case in which the control entity performs the resource configuration globally with global knowledge on the links served by the ANs in communication with the control entity.

### BRIEF DESCRIPTION OF THE DRAWINGS

The objects, advantages and characteristics of the present disclosure will be more apparent, according to descriptions of preferred embodiments in connection with the drawings, wherein:
Fig. 1 illustratively shows how beam of a link interferes with communications on another link in a case of high gain beamforming;
Fig. 2 is a diagram conceptually illustrating a mmW-RAT carrier and associated subbands, subframes and atomic scheduling units (ASUs).
Fig. 3 illustratively shows an exemplary resource allocation template configuration used in a resource allocation process;
Fig. 4(a) illustratively shows resource configurations for respective links as indicated by respective resource allocation templates in an exemplary wireless communication scenario;
Fig. 4(b) illustratively shows interference conflict in the resource configurations for some links as indicated by respective resource allocation templates after an exemplary unpredictable condition occurs in the exemplary scenario of Fig. 4(a);
Fig. 5 illustratively shows an exemplary resource allocation template configuration used in a resource allocation process according to an exemplary embodiment of the present disclosure;
Fig. 6(a) illustratively shows exemplary resource configurations as indicated by respective resource allocation templates for respective links according to an exemplary embodiment of the present disclosure in an exemplary wireless communication scenario;
Fig. 6(b) illustratively shows exemplary resource configurations as indicated by respective resource allocation templates for respective links according to an exemplary embodiment of the present disclosure after an exemplary unpredictable condition occurs in the exemplary scenario of Fig. 6(a);
Fig. 7 illustratively shows a flowchart of a resource allocation method in a control entity according to an exemplary embodiment of the present disclosure;
Fig. 8 illustratively shows a flowchart of a resource allocation method in an AN according to an exemplary embodiment of the present disclosure;
Fig. 9 illustratively shows a hierarchical resource allocation template configuration of a group-specific resource allocation template according to an embodiment of the present disclosure;
Fig. 10 is a block diagram illustrating functional modules of an exemplary control entity according to an embodiment of the present disclosure;
Fig. 11 is a block diagram illustrating an exemplary hardware implementation of a control entity according to an embodiment of the present disclosure; and
Fig. 12 is a block diagram illustrating functional modules of an exemplary AN according to an embodiment of the present disclosure;
Fig. 13 is a block diagram illustrating an exemplary hardware implementation of an AN according to an embodiment of the present disclosure.

It should be noted that various parts in the drawings are not drawn to scale, but only for an illustrative purpose, and thus should not be understood as any limitations and constraints on the scope of the present disclosure.

### DETAILED DESCRIPTION

In the discussion that follows, specific details of particular embodiments of the present techniques are set forth for purposes of explanation and not limitation. It will be appreciated by those skilled in the art that other embodiments may be employed apart from these specific details. Furthermore, in some instances detailed descriptions of well-known methods, nodes, interfaces, circuits, and devices are omitted so as not to obscure the description with unnecessary detail. Those skilled in the art will appreciate that the functions described may be implemented in one or in several nodes. Some or all of the functions described may be implemented using hardware circuitry, such as analog and/or discrete logic gates interconnected to perform a specialized function, Application Specific Integrated Circuits (ASICs), Programmable Logical Arrays (PLAs), etc. Likewise, some or all of the functions may be implemented using software programs and data in conjunction with one or more digital microprocessors or general purpose computers. Where nodes that communicate using the air interface are described, it will be appreciated that those nodes also have suitable radio communications circuitry. Moreover, the technology can additionally be considered to be embodied entirely within any form of computer-readable memory, including non-transitory embodiments such as solid-state memory, magnetic disk, or optical disk containing an appropriate set of computer instructions that would cause a processor to carry out the techniques described herein.

Hardware implementations of the presently disclosed techniques may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Note that although terminology commonly used to describe a wireless network based on mmW-RAT is used in this disclosure to exemplify the embodiments, the scope of the disclosure is by no means limited in this regard. Other wireless systems may also benefit from exploiting the ideas covered within this disclosure as appropriate when resource allocation is performed.

Since various wireless systems may benefit from exploiting the ideas covered within this disclosure as will be appreciated by the skilled in the art, terminologies like "terminal device" and "UE" as used herein are interchangeable and should be understood in a broad sense. Specifically, the terminal device (UE) should be understood to encompass a mobile telephone, a smartphone, a wireless-enabled tablet or personal computer, a wireless machine-to-machine unit, and the like.

Currently, it is supposed that one mmW carrier is composed by a number of sub-band carriers. Each sub-band can be of certain bandwidth, e.g. 100MHz, and the total carrier bandwidth can be up to 1 GHz or 2 GHz. Fig. 2 illustrates one mmW-RAT carrier with 4 sub-bands as an example. As will be well understood by the skilled in the art, the number of sub-bands is not limited to 4. The smallest resource grid in time and frequency domain is an atomic scheduling unit (ASU), which corresponds to a subband in the frequency domain and to a subframe in the time domain.

There may be a number of methods of allocating resources, such as a contention-based resource allocation scheme, a scheduling-based resource allocation scheme etc. The present disclosure focuses on the scheduling-based resource allocation scheme.

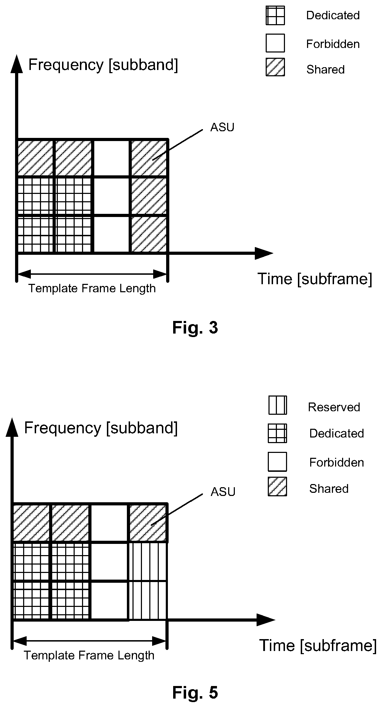

For the scheduling-based resource allocation scheme, Inventors have proposed a resource allocation approach based on a resource allocation template (called "a template frame"). The resource allocation template is a kind of resource allocation template, indicating respective types of resource (ASU(s)) to be allocated to a radio link (hereinafter, referred to as "link"), which is shown in Fig. 3.

The resource to be allocated to the link as indicated in the resource allocation template may comprise at least Dedicated Resource (ASU(s) marked with "+" in Fig. 3) to be allocated to the link. If the link is allocated with the Dedicated Resource, the link will have the highest priority to access the Dedicated Resource while any other link shall control its interference to the link on the allocated Dedicated Resource. Therefore, data transmission of the link on the Dedicated Resource can be performed with high reliability.

Optionally, the resource to be allocated to the link as indicated in the resource allocation template may comprise Shared Resource (ASU(s) marked with "/" in Fig. 3). If a link is allocated with the shared resource, both the link and other links can access the shared resource and the use of the shared resource by one of the links may produce interference to the others. Therefore, data transmission of the link on the shared resource is performed with lower reliability but can achieve enhanced data rate and/or satisfy requirements of the link on a boost of throughput etc.

The remaining resource which is not indicated by the resource allocation template to be allocated (blank ASU(s) in Fig. 3) is forbidden to be used for the data transmission of the link, which may be referred to as Forbidden Resource. It will be understood that the Forbidden Resource for the link may correspond to Dedicated Resource for other links which needs to be protected from interference of the link.

The Shared Resource and the Forbidden Resource may be optional resource types in the resource allocation template.

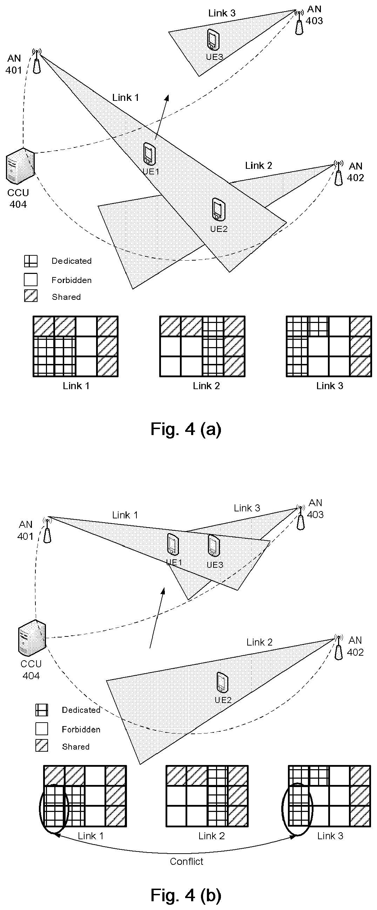

For illustration, an exemplary wireless communication scenario where the scheduling-based resource allocation scheme is implemented will be depicted with reference to Fig. 4(a).

As shown in Fig. 4(a), the exemplary wireless network comprises an AN cluster which includes a plurality of ANs (AN 401-AN 403 in this example) and a control entity (shown as a Central Control Unit (CCU) 404 in this example). The CCU 404 is shared by AN 401-AN 403 and is in communication with the AN 401-AN 403. There are three links in the exemplary scenario of Fig. 4(a), i.e., Link 1 between AN 401 and UE1, Link 2 between AN 402 and UE2, and Link 3 between AN 403 and UE3.

The CCU 404 may configure a resource allocation template for each of links served by AN 401-AN 403, so as to indicate resource to be allocated to the links.

In the example of Fig. 4(a), the CCU 404 can know from the link status information of Link 1, Link 2 and Link 3 received from the corresponding ANs that there is interference between Link 1 and Link 2, and Link 3 has no interference with either Link 1 or Link 2. Therefore, the CCU 404 may configure three resource allocation templates respectively for the three links based on the global knowledge of link status information on Link 1, Link 2 and Link 3 in such a way that the Dedicated Resource for Link 1 and the Dedicated Resource for Link 2 cannot have common parts of resource in order to well prevent Link 1 and Link 2 from interfering with each other, while there may be common parts of resource between the Dedicated Resource for Link 3 and the Dedicated Resource for Link 1 or Link 2. The lower part of Fig. 4(a) illustratively shows resource configurations for Link 1, Link 2 and Link 3 as indicated by respective resource allocation templates in the exemplary wireless communication scenario.

Further, the resource allocation template for Link 1 may be updated by the CCU 404 according to relevant link status information of Link 1, Link 2, Link 3.

Of course, the above description on the resource allocation template for Link 1 may also apply to the resource allocation template for Link 2 or 3.

It is better not to update the resource allocation template for the link according to the varying links status information of the link (Link 1 in this example) itself and other links (Link 2 and Link 3 in this example) in real time, in order to save system overhead, such as information exchange between CCU and AN, UE to AN, computation complexity etc.

Nevertheless, there arises a problem that if an unpredictable condition requiring additional resource occurs during the current resource allocation template is used, the current resource allocation template cannot satisfy the resource allocation requirement caused by the unpredictable condition.

The unpredictable conditions may comprise several aspects. For example,
- Channel quality loss experienced by the link (e.g. exceeding a preset threshold) due to either interference caused by mobility of either the AN and/or the UE of the link, and/or new interference caused by other links without the mobility of either the AN and/or the UE of the link.
   With reference to Fig. 4(b), the above problem of the current resource allocation template unable to satisfy the resource allocation requirement caused by the unpredictable condition will be described in detail.
   Fig. 4(b) illustratively shows interference conflict in the resource configurations for some links as indicated by respective resource allocation templates after an exemplary unpredictable condition occurs in the exemplary scenario of Fig. 4(a). In the exemplary scenario of Fig. 4(b), there is no interference between Link 1 and Link 2 anymore but interference between Link 3 and Link 1 occurs, as the UE1 moves from the exemplary scenario of Fig. 4(a). Thus, the exemplary unpredictable condition in Fig. 4(b) is that Link 3 experiences channel quality loss due to interference caused by mobility of UE1 of Link 1. In this case, the common Dedicated Resource for Link 1 and Link 3 (which are circled in Fig. 4(b)) have interference conflict. That is, the common Dedicated Resource for Link 3 cannot be protected well from interference of Link 1, and thus Quality of Service (QoS) over the common Dedicated Resource for Link 3 cannot be guaranteed. So does Link 1. Obviously, the current resource allocation template of Link 3 cannot satisfy the resource allocation requirement caused by this case.
- Traffic variation over the link (e.g. exceeding a preset threshold).
   Due to the unpredictable traffic variation, resource configuration based on the fixed template may be lack of flexibility to satisfy the resource allocation requirement caused by this case, which may further result in low radio resource efficiency. For instance, a link which is allocated with a small amount of resource as indicated in its resource allocation template may have a lot of data to transmit, while a link which is allocated with a large amount of resource as indicated in its resource allocation template may quickly empty its buffer and does not need the resource anymore.
- Occurrence of a link with no resource currently allocated thereto.

If there occurs a link between a new UE and one of ANs which are in communication with the CCU, the link cannot transmit until an adapted resource allocation template is allocated for the link. That is, the resource allocation requirement caused by the unpredictable condition cannot be satisfied either.

In order to solve the above problem of the current resource allocation template unable to satisfy the resource allocation requirement caused by the unpredictable condition (i.e., how to deal with links that change their channel information status based on the same resource allocation template), the present disclosure proposes technical solutions of allocating resource to a link according to a resource allocation template in which a part of resource is reserved and preconfigured by the CCU in the resource allocation template for the unpredictable condition, which is referred to as "Reserved Resource".

Fig. 5 illustratively shows an exemplary resource allocation template configuration used in a resource allocation process according to an exemplary embodiment of the present disclosure.

Similar with the resource allocation template in Fig. 3, the resource allocation template in Fig. 5 is a kind of resource allocation template, indicating respective types of resource (ASU(s)) to be allocated to a link.

As shown in Fig. 5, Reserved Resource (ASU(s) marked with "|" in Fig. 5) is configured in the resource allocation template by the CCU. In addition, the resource allocation template according to the embodiment of the present disclosure may comprise Dedicated Resource, Shared Resource (optionally) and Forbidden Resource (optionally), which have been described previously in connection with Fig. 3 and the description thereof will be omitted here.

The amount of the Reserved Resource (i.e., the number of reserved ASUs) may be adjusted by the CCU according to local or global knowledge of the links, e.g., information on probability of unpredicted conditions to occur, statistics and/or history of usage of the Reserved Resource, interference levels in the radio environment; number of active and/or inactive nodes (e.g. UEs) in the radio environment; mobility patterns of the nodes (e.g. UEs, ANs) etc.

The Reserved Resource may not necessarily be configured in a constant position of the resource allocation template, and may vary over time based on e.g. interference levels on some specific resource, capabilities or limitations of certain nodes to perform transmissions on a part of the bandwidth; coordination of resource type selection with neighboring AN(s) etc.

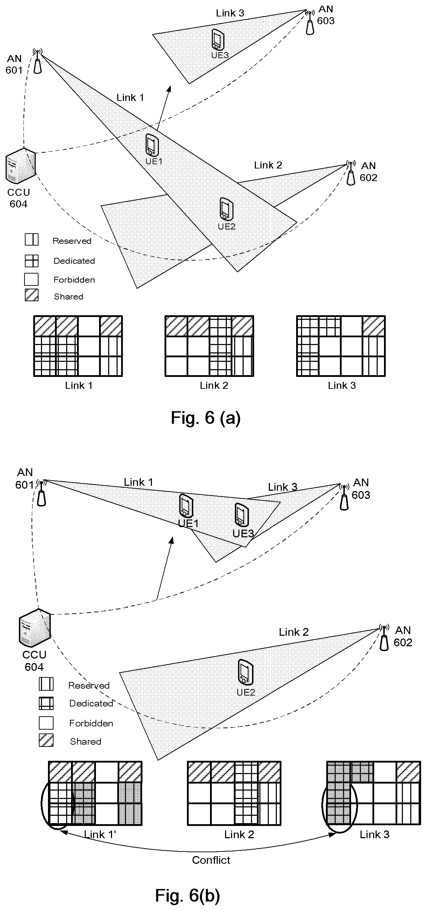

Hereinafter, embodiments of the present disclosure will be illustrated in detail with reference to Figs. 6(a) and 6(b).

Fig. 6(a) illustratively shows exemplary resource configurations for respective links as indicated by respective resource allocation templates according to an exemplary embodiment of the present disclosure in an exemplary wireless communication scenario. The exemplary wireless communication scenario of Fig. 6(a) is identical with that of Fig. 4(a), and thus the description on the exemplary wireless communication scenario of Fig. 6(a) will be omitted for simplicity. The only difference between Fig. 6(a) and Fig. 4(a) is that Reserved Resource is configured in each resource allocation template used in Fig. 6(a).

Fig. 6(b) illustratively shows resource configurations for respective links as indicated by respective resource allocation templates according to an exemplary embodiment of the present disclosure after an exemplary unpredictable condition occurs in the exemplary scenario of Fig. 6(a). Similar with the scenario as shown in Fig. 4(b), there is no interference between Link 1 and Link 2 anymore but interference between Link 3 and Link 1 occurs, as the UE1 moves from the exemplary scenario of Fig. 6(a). Thus, the exemplary unpredictable condition in Fig. 6(b) is that Link 3 experiences channel quality loss due to interference caused by mobility of UE1 of Link 1. In this case, the circled Dedicated Resource for Link 3 has interference conflict with the circled Dedicated Resource for Link 1 due to the mobility of UE1 of Link 1. According to the embodiment of the present disclosure, the Reserved Resource preconfigured in the resource allocation template, instead of the circled Dedicated Resource, may be allocated to Link 1. Fig. 6(b) shows the resource to be allocated to Link 1 and Link 3 with dark ASUs. It can be seen from Fig. 6(b) that the resource allocation requirement caused by the unpredictable condition may be satisfied by using the Reserved Resource configured in the resource allocation template according to the embodiment of the present disclosure.

The above has described the resource allocation template in which the Reserved Resource is configured according to the embodiment of the present disclosure in the exemplary scenario of Fig. 6(b). However, it will be understood by the skilled in the art that the idea of configuring the Reserved Resource in the resource allocation template as disclosed in the present disclosure may also be applied to scenarios in which other unpredictable conditions occur.

For example, in the case of the unpredictable traffic increase on the link, the Reserved Resource preconfigured in the resource allocation template according to the embodiment of the present disclosure may be allocated to the link to satisfy the increased traffic requirement. In the case of occurrence of a link with no resource currently allocated thereto, the Reserved Resource preconfigured in the resource allocation template according to the embodiment of the present disclosure may be allocated to the link.

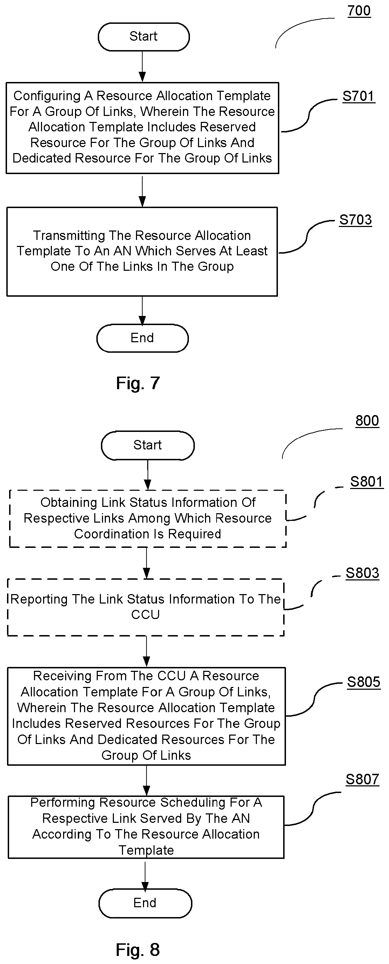

Hereinafter, resource allocation methods according to exemplary embodiments of the present disclosure in the exemplary wireless communication scenarios of Figs. 6(a) and 6(b) will be described in detail with reference to Figs. 7-8.

Fig. 7 illustratively shows a flowchart of a resource allocation method 700 in a control entity according to an exemplary embodiment of the present disclosure.

As previously discussed, the CCU is a control entity in a wireless communication system for indicating resource to be allocated to a link between an AN in communication with the control entity and a terminal device in a coverage of the AN.

In the scenario as shown in Fig. 6(a), the CCU 604 is shared by AN 601-AN 603, and controls AN 601-AN 603. There are three links in the wireless communication system, i.e., Link 1 between AN 601 and UE1, Link 2 between AN 602 and UE2, and Link 3 between AN 603 and UE3.

As shown in Fig. 7, in Step S701 of the method 700, the CCU configures a resource allocation template for a link, wherein the resource allocation template includes Reserved Resource for the link and Dedicated Resource for the link. In the scenario as shown in Fig. 6(a), the CCU 604 configures a resource allocation template for Link 1, a resource allocation template for Link 2 and a resource allocation template for Link 3, respectively.

Dedicated Resource is commonly configured by the CCU in the three resource allocation templates. In addition, the resource allocation template for a link (Link 1, Link 2, or Link 3) comprises Dedicated Resource for the link.

In addition, the resource allocation template for a link (Link 1, Link 2, or Link 3) may further include Forbidden Resource for the link which is dedicated resource for other links, and/or Shared Resource for at least some of the links.

As previously described in connection with Figs. 6(a) and 6(b), the Reserved Resource may be used for satisfying the resource allocation requirement caused by the unpredictable condition. For example, the Reserved Resource may be allocated to the link in a case that channel quality loss experienced by the link exceeds a certain threshold (as shown in Fig. 6(b)); and/or traffic variation over the link exceeds a certain threshold; and/or the Reserved Resource may be allocated to a link with no resource currently allocated thereto.

The resource allocation template can be configured by the CCU according to received link status information of respective links in the wireless communication system among which resource coordination is required, such as relevant measurements and/or data rate requests etc. from peer communication devices (i.e. a UE and an AN serving the UE) on the respective links. As will be understood by the skilled in the art, a link having or potentially having interference with another link may need resource coordination with the other link for interference avoidance.

In the example of Fig. 6(a), the resource allocation template for Link 1 may be configured by the CCU 604 according to link status information of Link 1 received from AN 401, such as relevant measurements and/or data rate requests from peer communication devices on Link 1 (e.g., AN 401 and User Equipment 1 (UE1)) etc., as well as link status information of other links (Link 2 and/or Link 3 in this example) which may need resource coordination with Link 1.

The CCU 604 may know from the link status information of Link 1, Link 2 and Link 3 received from the corresponding ANs that there is interference between Link 1 and Link 2, and Link 3 has no interference with either Link 1 or Link 2. Therefore, the CCU 604 may configure three resource allocation templates respectively for the three links based on the global knowledge of link status information on Link 1, Link 2 and Link 3 in the following exemplary approach of configuring the resource allocation template according to the embodiment of the present disclosure. In this example, the CCU 604 may firstly create a general resource allocation template for Link 1, Link 2 and Link 3 configured with only the Reserved Resource common to Link 1, Link 2 and Link 3. Then, each of three resource allocation templates respectively for Link 1, Link 2 and Link 3 may be configured with the Dedicated Resource, the Shared Resource (optional) and the Forbidden Resource (optional) according to the relevant link status information of Link 1, Link 2 and Link 3. The Reserved Resource previously configured in the three resource allocation template should be excluded in determination of the respective resource allocation templates. In order to well prevent Link 1 and Link 2 from interfering with each other, the Dedicated Resource for Link 1 and the Dedicated Resource for Link 2 cannot have common parts of resource; while there may be common parts of resource between the Dedicated Resource for Link 3 and the Dedicated Resource for Link 1 or Link 2. The lower part of Fig. 6(a) illustratively shows resource configurations for Link 1, Link 2 and Link 3 as indicated by respective resource allocation templates in the exemplary scenario.

As will be understood by the skilled in the art, there may be a plurality of approaches of configuring the resource allocation template according to the embodiment of the present disclosure, and the present disclosure is not limited to the above exemplary approach.

Alternatively, the resource allocation template may also be initially predetermined by the CCU, and may be adapted according to received relevant link status information subsequently.

In Step S703 of the method 700, the CCU transmits the resource allocation template for the link to the AN which serves the link. The AN may perform resource scheduling for the link according to the received resource allocation template.

As previously discussed, it is better not to update the resource allocation template for the link according to the varying links status information of the link (Link 1 in this example) itself and other links (Link 2 and Link 3 in this example) in real time, in order to save system overhead, such as information exchange between CCU and AN, UE to AN, computation complexity etc. Therefore, it is generally to set an appropriate resource allocation template update cycle, e.g. hundreds of milliseconds, considering balance between the system overhead and the resource allocation requirements of the respective links. Within the resource allocation template update cycle, the resource allocation template allocated to each of links is fixed once the resource allocation template is configured.

The CCU may perform the resource allocation method 700 according to the predetermined resource allocation template update cycle, so as to update the resource allocation template for the link.

As will be recognized by the skilled in the art, the resource allocation method 700 may also be triggered by an event, e.g. by the mean of a specific request from an AN or UE, by detection of an unpredictable condition in the wireless communication system, etc.

Fig. 8 illustratively shows a flowchart of a resource allocation method 800 in an AN according to an exemplary embodiment of the present disclosure.

As shown in Fig. 8, in Step S801 of the method 800, the AN may obtain link status information of respective links among which resource coordination is required; and in Step S803, the AN may report the link status information to the CCU.

As previously described, the resource allocation template can be configured by the CCU according to received link status information of respective links in the wireless communication system among which resource coordination is required, such as relevant measurements and/or data rate requests etc. from peer communication devices (i.e. a UE and an AN serving the UE) on the respective links. Alternatively, the resource allocation template may be initially predetermined by the CCU without any link status information, and may be adapted according to the link status information subsequently. Therefore, Steps S801 and S803 are not necessary steps of the method 800, and thus are shown in Fig. 8 with dotted-line blocks.

In Step S805, the AN receives from the CCU a resource allocation template for a link served by the AN. In the scenarios of Figs. 6(a) and 6(b), AN 601 receives the resource allocation template for Link 1, AN 602 receives the resource allocation template for Link 2, and AN 603 receives the resource allocation template for Link 3.

In Step S807, the AN performs resource scheduling for at least one link served by the AN, according to the received resource allocation template.

In particular, the AN may allocate the Reserved Resource as indicated the received resource allocation template for satisfying the resource allocation requirement caused by the unpredictable condition. For example, the AN may allocate the Reserved Resource to the link in a case that channel quality loss experienced by the link exceeds a certain threshold; and/or traffic variation over the link exceeds a certain threshold; and/or may allocate the Reserved Resource to the link with no resource currently allocated thereto.

The scenario of Fig. 6(b) shows an exemplary unpredictable condition in which Link 3 experiences channel quality loss due to interference caused by mobility of UE1 of Link 1. As the UE1 moves from the exemplary scenario of Fig. 6(a), there is no interference between Link 1 and Link 2 anymore but interference between Link 3 and Link 1 occur. In this case, the circled Dedicated Resource for Link 3 has interference conflict with the circled Dedicated Resource for Link 1 due to the mobility of UE1 of Link 1. According to the embodiment of the present disclosure, the Reserved Resource configured in the resource allocation template for Link 1, instead of the circled Dedicated Resource, may allocate the circled Dedicated Resource by the AN 601 to Link 1.

It will be understood by the skilled in the art that the concept proposed in the present disclosure of configuring the Reserved Resource in the resource allocation template for the unpredictable condition may also be applied to scenarios in which other unpredictable conditions occur.

The AN may perform the resource allocation method 800 according to the predetermined resource allocation template update cycle. The AN may receive from the CCU an updated resource allocation template for the link, and may perform resource scheduling for a respective link served by the AN according to the updated resource allocation template.

In the above embodiments, the resource allocation template is specific to a link, which may be referred to as a link-specific resource allocation template. Configuration of the link-specific resource allocation template by the CCU may need global knowledge of link status information on the respective links served by the respective ANs in communication with the CCU, which may increase the complexity/burden of the CCU, and may also require a longer time for resource configuration and allocation within the resource allocation template update cycle.

In another embodiment of the present disclosure, the resource allocation template configured for a link may be broadly extended to be a resource allocation template configured for a group of links. The resource allocation template for the group of links may be shared among links in the group, which may be referred to as a group-specific resource allocation template. As will understood by the skilled in the art, the link-specific resource allocation template may be regarded as a specific example of the group-specific resource allocation template in which the group of links only contains one link.

In the embodiment for the group-specific resource allocation template, the method 700 comprises Step S701 in which the CCU configures a resource allocation template for a group of links.

With reference to Figs. 6(a) and 6(b), the resource configurations in the case of the group-specific resource allocation template are similar with those in the case of the link-specific resource allocation template, except that the elements "Link 1, 2, 3" in the case of the link-specific resource allocation template is replaced with the elements "Link Group 1, 2, 3" (not shown) in the case of the group-specific resource allocation template.

Common Dedicated Resource may be configured by the CCU in the three group-specific resource allocation templates. In addition, the group-specific resource allocation template (for e.g. Link Group 1, Link Group 2, or Link Group 3) may comprise Dedicated Resource for the group of links.

Alternatively, the group-specific resource allocation template (for e.g. Link Group 1, Link Group 2, or Link Group 3) may further include Forbidden Resource for the group of links which is dedicated resource for other groups of links, and/or Shared Resource for at least some of the group of links.

Similar with the embodiment for the link-specific resource allocation template, the Reserved Resource may be used for satisfying the resource allocation requirement caused by the unpredictable condition. For example, the Reserved Resource may be allocated to a link in the group in a case that channel quality loss experienced by the link exceeds a certain threshold; and/or traffic variation over the link exceeds a certain threshold; and/or the Reserved Resource may be allocated to a link occurred in the coverage of the AN which is serving a link in the group with no resource currently allocated thereto.

In Step S703, the CCU transmits the group-specific resource allocation template to the AN which serves at least one of the links in the group.

In the wireless communication network, one or more ANs may constitute an AN cluster. A coverage of an AN may be divided into a plurality of sectors. A link between a UE in the coverage of the AN and the AN may be referred to as a link served by the AN. Further, if the UE can be located precisely in a sector of the AN, the link between the UE and the AN may be referred to as a link served by the sector.

The group of links can be constituted by one or more links served by ANs in an AN cluster, or one or more links served by an AN, or one or more links served by a sector of an AN.

In particular, if the group of links are consisted of links served by ANs in an AN cluster, the same group-specific resource allocation template is transmitted to all of the ANs in the AN cluster.

If the group of links are consisted of links served by an AN or served by a sector of an AN, the group-specific resource allocation template is transmitted to the AN.

The CCU may perform the resource allocation method 700 according to the predetermined resource allocation template update cycle, so as to update the resource allocation template for the group of links. Within the resource allocation template update cycle, the resource allocation template configured for the group of links is fixed.

As previously described, the resource allocation method 700 may also be triggered by an event.

In a corresponding embodiment of the method 800 for the group-specific resource allocation template, the AN receives from the CCU a group-specific resource allocation template in Step S805. The group-specific resource allocation template includes Reserved Resource for the group of links and Dedicated Resource for the group of links.

In Step S807, the AN performs resource scheduling for at least one link served by the AN, according to the received resource allocation template.

In particular, the AN may allocate the Reserved Resource as indicated the received resource allocation template for satisfying the resource allocation requirement caused by the unpredictable condition. For example, the AN may allocate the Reserved Resource to the link in the group in a case that channel quality loss experienced by the link exceeds a certain threshold; and/or traffic variation over the link exceeds a certain threshold; and/or may allocate the Reserved Resource to a link occurred in the coverage of the AN which is serving a link in the group with no resource currently allocated thereto.

The AN may perform the resource allocation method 800 according to the predetermined resource allocation template update cycle. The AN may receive from the CCU an updated resource allocation template for the group of links, and may perform resource scheduling for a respective link served by the AN according to the updated resource allocation template.

As seen from the above, the technical means of the AN allocating Reserved Resource which is preconfigured in a resource allocation template by the CCU for the unpredictable condition to a link may be substantially identical in both the embodiments for the link-specific resource allocation template and the group-specific resource allocation template.

However, in Step S807 of performing resource scheduling in the method 800 for the group-specific resource allocation template embodiment, the AN may further configure a resource allocation template for a subset of the group of links by selecting resource from the Dedicated Resource for the group of links as Dedicated Resource for the subset of the group of links and selecting the remaining Dedicated Resource for the group of links as Dedicated Resource for other subset of the group of links, which may be referred to as a hierarchical resource allocation template configuration process.

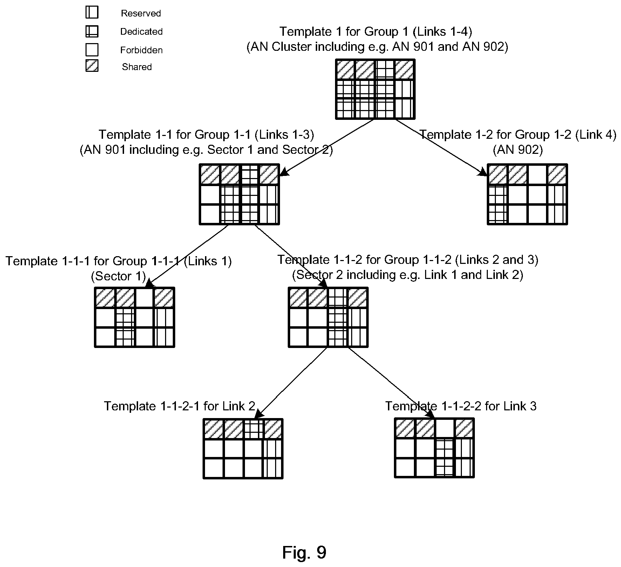

Hereinafter, an exemplary hierarchical resource allocation template configuration according to an embodiment of the present disclosure will be described in detail with reference to Fig. 9.

In the exemplary scenario in Fig. 9, an AN cluster may comprise two ANs (AN 901 and AN 902). The AN 901 may be divided into two sectors (Sector 1 and Sector 2), and may have three links (Link 1, Link 2, and Link 3), wherein Link 1 is in Sector 1 of the AN 901, and Link 2 and Link 3 are in Sector 2 of the AN 901. The AN 902 may have only one link (Link 4). Of course, the exemplary scenario in Fig. 9 is only used for the purpose of illustration of the exemplary hierarchical resource allocation template configuration according to the embodiment of the present disclosure, but the present disclosure is not limited to this.

As shown in Fig. 9, a resource allocation template (Template 1 in this example) may be configured by the CCU for a group of links served by ANs (AN 901 and AN 902 in this example) in an AN cluster. Both AN 901 and AN 902 may receive the Template 1 from the CCU, which includes Dedicated Resource and Reserved Resource for the group of links (Link 1, Link 2, Link 3 and Link 4) served by both AN 901 and AN 902 (represented as Group 1 for simplicity).

Taking AN 901 as an example, once the AN 901 receives Template 1 for Group 1, the AN 901 may locally further configure a resource allocation template (represented as Template 1-1) for a group of links served by the AN 901 (represented as Group 1-1 for simplicity, which are Link 1, Link 2 and Link 3 in this example) by selecting a subset of the Dedicated Resource for Group 1 as Dedicated Resource for Group 1-1 and selecting the remaining Dedicated Resource for Group 1 as Forbidden Resource for Group 1-1 (which may be Dedicated Resource for a group of links served by the AN 902 (referred to as Group 1-2 for simplicity, which is Link 4 in this example), depending on the knowledge of the link status information on the respective links (Link 1, Link 2 and Link 3) served by AN 901 and the link (Link 4) served by AN 902.

If necessary, the AN 901 may further divide the Template 1-1 for sectors of the AN 901, so as to satisfy the resource allocation requirements of the links served by AN 901. As shown in the example of Fig. 9, the AN 901 may locally further configure a resource allocation template (represented as Template 1-1-1) for links in Sector 1 of the AN 901 (referred to as Group 1-1-1 for simplicity, which is Link 1 in this example) and a resource allocation template (represented as Template 1-1-2) for links in Sector 2 of the AN 902 (referred to as Group 1-1-2 for simplicity, which are Link 2 and Link 3 in this example). In particular, the AN 901 may select resource from the Dedicated Resource for Group 1-1 as Dedicated Resource for Group 1-1-1 (Link 1) and selecting the remaining Dedicated Resource for Group 1-1 as Forbidden Resource for Group 1-1-1 (which may be Dedicated Resource for Group 1-1-2 (Link 2 and Link 3), depending on local knowledge of the link status information on the respective links (Link 1, Link 2 and Link 3) served by the AN 901.

Similarly, as shown in the example of Fig. 9, the AN 901 may locally further configure a resource allocation template (represented as Template 1-1-2-1) for Link 2 and a resource allocation template (represented as Template 1-1-2-2) for Link 3. In particular, the AN 901 may select resource from the Dedicated Resource for Group 1-1-2 as dedicated resource for Link 2 and selecting the remaining Dedicated Resource for Group 1-1-2 as Forbidden Resource for Link 2 (which may be Dedicated Resource for Link 3, depending on local knowledge of the link status information on the respective links in Sector 2 of the AN 901, if necessary, so as to satisfy the resource allocation requirements of the links in Sector 2 of the AN 901.

Then, the AN 901 may perform resource scheduling for the respective link according to the further configured resource allocation template, i.e., Template 1-1-1 for Link 1, Template 1-1-2-1 for Link 2, Template 1-1-2-2 for Link 3, and Template 1-2 for Link 4.

As recognized by the skilled in the art, some functions of the CCU may be distributed to the AN(s) in this embodiment, so that the AN may refine the resource allocation template according to local knowledge of the link status information on the respective links served by the AN. Therefore, the complexity/burden on the CCU may be effectively reduced. Additionally, the resource configuration may be performed locally at the AN more quickly with more precise local knowledge and thus is more efficient than the case in which the CCU performs the resource configuration globally with global knowledge on the links served by the ANs in communication with the CCU.

Although the example in Fig. 9 shows a hierarchical resource allocation template configuration in a plurality of levels, it will be well understood by the skilled in the art that if the same resource allocation template can (i.e., is appropriate to) be used for any link in the group and the resource allocation requirements of the links in the group can be satisfied, it is not necessary to divide the resource allocation template anymore until there is only one link in the group and the resource allocation template becomes a link-specific resource allocation template. The number of levels may be selected appropriately in practice according to the resource allocation requirements of the links in the group. For example, if no matter which link(s) in the group is (are) allocated with the resource as indicated in the resource allocation template, other links in the group allocated with the same resource as indicated in the same resource allocation template may not be interfered, the resource allocation requirements of the links in the group may be satisfied, and it is not necessary to further divide the resource allocation template anymore. For example, the same resource allocation template may be configured for Link 1 and Link 3 in Fig. 6(a), or for Link 2 and Link 3 in Fig. 6(a), or for Link 1 and Link 2 in Fig. 6(b), or for Link 2 and Link 3 in Fig. 6(b). If the group of links include Link 1 and Link 3 in Fig. 6(a), or Link 2 and Link 3 in Fig. 6(a), or Link 1 and Link 2 in Fig. 6(b), or Link 2 and Link 3 in Fig. 6(b), the resource allocation template for the group of links may not be further divided anymore.

As will be understood by the skilled in the art, a group of links may use a common resource allocation template without further subdivision or refinement, for example in the case where the links have certain common practical aspects, such as strong spatial correlation, or similar interference impact, or good enough backhauling to perform interference coordination etc.

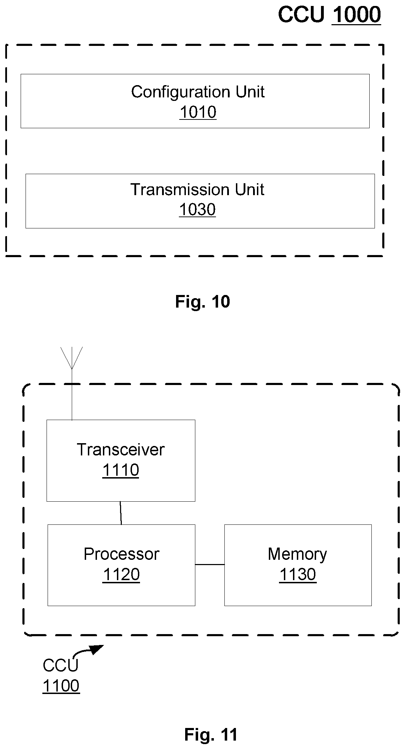

Hereinafter, a functional architecture of the CCU will be described with reference to Fig. 10.

As shown in Fig. 10, the CCU 1000 comprises a template configuration unit 1010 and a transmission unit 1030. As will be understood by the skilled in the art, common components, such as a reception unit, in the CCU 1000 are omitted in Fig. 10 for simplification, and the description thereof are also omitted here for simplicity.

According to the embodiment of the present disclosure, the template configuration unit 1010 configures a resource allocation template for a group of links (including the case of one link) in the wireless communication system, wherein the resource allocation template includes Reserved Resource for the group of links and Dedicated Resource for the group of links.

The transmission unit 1030 transmits the resource allocation template to an AN which serves at least one of the links in the group.

Though not repeated here for avoiding redundancy, it will be well understood by the skilled in the art that the method 700 described above with reference to Fig. 7 may be implemented by the CCU 1000. In particular, Step S701 may be performed by the template configuration unit 1010 in the CCU 1000, and Step S703 may be performed by the transmission unit 1030 in the CCU 1000.

In light of the above-described functional architectures of the CCU 1000, the skilled in the art can conceive various implementations, wherein the functional blocks of the CCU 1000 may be implemented in hardware, software, and/or firmware.

As an alternative implementation, there may be provided a CCU 1100 comprising a transceiver 1110, a processor 1120 (including but not limited to a microprocessor, a microcontroller or a Digital Signal Processor (DSP), etc.) coupled to the transceiver 1110, and a memory 1130 coupled to the processor 1120, as illustrated in Fig. 11.

The memory 1130 stores machine-readable program code. The processor 1120, when executing the stored program code, act as the template configuration unit 1010. The transceiver 1110 may performs transmission of the resource allocation template to the AN, and may receive relevant link status information, and other necessary information from the AN.

As will understood by the skilled in the art, the CCU may be an independent physical entity in the wireless communication system, and may also be a logical entity which may be implemented in one of ANs in the system.

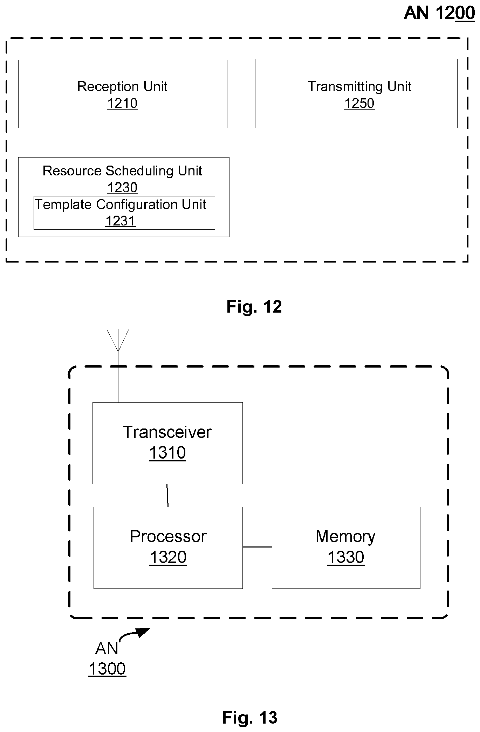

Hereinafter, a functional architecture of an AN according to an embodiment of the present disclosure will be described with respect to Fig. 12.

As shown in Fig. 12, the AN 1200 comprises a reception unit 1210, a resource scheduling unit 1230 and a transmission unit 1250. As will be understood by the skilled in the art, common components in the AN 1200 are omitted in Fig. 12 for simplification, and the description thereof are also omitted here for simplicity.

According to the embodiment of the present disclosure, the reception unit 1210 receives from the CCU a resource allocation template for a group of links (including the case of one link) in the communication system, wherein the resource allocation template includes Reserved Resources for the group of links and Dedicated Resources for the group of links.

The resource scheduling unit 1230 performs resource scheduling for a respective link served by the AN 1200 using the resource allocation template.

In an embodiment, the reception unit 1210 may obtain link status information of respective links among which resource coordination is required, and the transmission unit 1250 may report the link status information to the CCU.

In an embodiment, the resource scheduling unit 1230 may allocate the Reserved Resource to a link in the group in a case that channel quality loss experienced by the link exceeds a certain threshold; and/or traffic variation over the link exceeds a certain threshold; and/or may allocate the Reserved Resource to a link with no resource currently allocated thereto.

In an embodiment, the resource scheduling unit 1230 may further comprises a template configuration unit 1231, configured to further configure another resource allocation template for a subset of the group of links by selecting resource from the dedicated resource for the group of links as Dedicated Resource for the subset of the group of links and selecting the remaining Dedicated Resource for the group of links as Dedicated Resource for other subset of the group of links. And then, the resource scheduling unit 1230 may perform resource scheduling for the respective link using the other resource allocation template.

Though not repeated here for avoiding redundancy, it will be well understood by the skilled in the art that the method 800 described above with reference to Fig. 8 may be implemented by the AN 1200. In particular, Steps S801 (optional) and S805 may be performed by the reception unit 1210 in the AN 1200, Step S807 may be performed by the resource scheduling unit 1230 in the CCU 1000, and Step S803 (optional) may be performed by the transmission unit 1250.

In light of the above-described functional architectures of the AN 1200, the skilled in the art can conceive various implementations, wherein the functional blocks of the AN 1200 may be implemented in hardware, and/or software, and/or firmware.

As an alternative implementation, there may be provided an AN 1300 comprising a transceiver 1310, a processor 1320 (including but not limited to a microprocessor, a microcontroller or a Digital Signal Processor (DSP), etc.) coupled to the transceiver 1310, and a memory 1330 coupled to the processor 1320, as illustrated in Fig. 13.

The memory 1330 stores machine-readable program code. The processor 1320, when executing the stored program code, act as the resource scheduling unit 1230. The transceiver 1310 may receive a resource allocation template for a group of links from the CCU and optionally obtain link status information of respective links among which resource coordination is required, as well as other necessary information for communication, and may transmit relevant link status information and other necessary information to the CCU and the UE.

As will be appreciated by the skilled in the art, any implementations of the embodiments of the present disclosure in software may be stored in a computer readable storage medium. The computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, embodiments provide a program comprising code for implementing the resource allocation methods and the CCU and the AN using the same as claimed in any one of the claims of this specification and a machine-readable storage storing such a program. Still further, such programs may be conveyed electronically via any medium such as a communication signal carried over a wired or wireless connection and embodiments suitably encompass the same.

The technical solutions of the present disclosure may at least have beneficial effects as follows:
By configuring reserved resource in the resource allocation template, a flexible resource configuration may be provided in the resource allocation template fixed within a resource allocation template update cycle.

By allocating the reserved resource under any of unpredictable conditions, e.g., channel quality loss experienced by the link (e.g. exceeding a preset threshold) due to either interference caused by mobility of either the AN and/or the UE of the link, and/or new interference caused by other links without the mobility of either the AN and/or the UE of the link, traffic variation over the link (e.g. exceeding a preset threshold), occurrence of a link with no resource currently allocated thereto etc., the resource allocation requirement caused by any of the above unpredictable conditions may be satisfied.

By configuring a resource allocation template for a group of links, some functions of the CCU may be distributed to the AN(s), thus reducing complexity/burden of the CCU. Furthermore, configuring the resource allocation template locally at the AN enables resource configuration to be performed more quickly with more precise local knowledge than the case in which the control entity performs the resource configuration globally with global knowledge on the links served by the ANs in communication with the CCU.

The above is only the preferred embodiments of the present disclosure and the present disclosure is not limited to the above embodiments. Therefore, any modifications, substitutions and improvements to the present disclosure are possible without departing from the scope of the present disclosure.

## Claims

1. A method (700) in a control entity of a communication system for allocating resource to a link between an access node, AN, in communication with the control entity and a terminal device in a coverage of the AN, the method (700) comprising:
configuring (S701) a resource allocation template for a group of links in the communication system, wherein the resource allocation template includes reserved resource for the group of links and dedicated resource for the group of links, wherein the reserved resource is used for satisfying resource allocation requirement, of a link in the group of links, caused by an unpredictable condition, wherein the unpredictable condition comprises that channel quality loss experienced by the link in the group of links exceeds a first threshold, and wherein a subset of the dedicated resource for the group of links is dedicated resource for a subset of the group of links and the remaining dedicated resource is dedicated resource for another subset of the group of links; and
transmitting (S703) the resource allocation template to an AN which serves at least one link in the group of links.

2. The method (700) of claim 1, wherein the resource allocation template can be configured according to link status information of respective links in the group of links in the communication system among which resource coordination is required.

3. The method (700) of claim 1 or 2, wherein the reserved resource is allocated to a link in the group of links for satisfying the resource allocation requirement caused by the unpredictable condition, wherein the unpredictable condition further comprises traffic variation over the link in the group of links exceeding a second threshold; and/or occurrence of a link with no resource currently allocated thereto.

4. The method (700) of claim 1 or 2, wherein the group of links can be consisted of:
one or more links served by ANs in an AN cluster, or
one or more links served by an AN, or
one or more links served by a sector of an AN.

5. The method (700) of claim 1 or 2, wherein links in the communication system are divided into one or more groups of links, and wherein the resource allocation template for the group of links further includes dedicated resource for other groups of links and/or shared resource for at least some of the one or more groups of links.

6. The method (700) of claim 1 or 2, wherein the method (700) is performed according to a resource allocation template update cycle, within which the resource allocation template configured for the group of links is fixed.

7. The method (700) of claim 1 or 2, wherein the control entity is a logical entity which is implemented in one of ANs.

8. A control entity (1000) in a communication system for indicating resource to be allocated to a link between an access node, AN, in communication with the control entity (1000) and a terminal device in a coverage of the AN, the control entity (1000) comprising:
a template configuration unit (1010) configured to configure a resource allocation template for a group of links in the communication system, wherein the resource allocation template includes reserved resource for the group of links and dedicated resource for the group of links, wherein the reserved resource is used for satisfying resource allocation requirement, of a link in the group of links, caused by an unpredictable condition, wherein the unpredictable condition comprises that channel quality loss experienced by the link in the group of links exceeds a first threshold, and wherein a subset of the dedicated resource for the group of links is dedicated resource for a subset of the group of links and the remaining dedicated resource is dedicated resource for another subset of the group of links; and
a transmission unit (1030) configured to transmit the configured resource allocation template to an AN which serves at least one link in the group of links.

9. A method (800) in an access node, AN, of a communication system for allocating resource to a link between the AN in communication with a control entity and a terminal device in a coverage of the AN, the method (800) comprising:
receiving (S805) from the control entity a resource allocation template for a group of links in the communication system, wherein the resource allocation template includes reserved resource for the group of links and dedicated resource for the group of links, wherein the reserved resource is used for satisfying resource allocation requirement, of a link in the group of links, caused by an unpredictable condition, wherein the unpredictable condition comprises that channel quality loss experienced by the link in the group of links exceeds a first threshold, and wherein a subset of the dedicated resource for the group of links is dedicated resource for a subset of the group of links and the remaining dedicated resource is dedicated resource for another subset of the group of links; and
performing (S807) resource scheduling for a respective link in the group of links served by the AN according to the resource allocation template.

10. The method (800) of claim 9, further comprising:
obtaining (S801) link status information of respective links in the group of links among which resource coordination is required; and
reporting (S803) the link status information to the control entity.

11. The method (800) of claim 9 or 10, wherein the step (S807) of performing resource scheduling comprises allocating the reserved resource to a link in the group of links for satisfying the resource allocation requirement caused by the unpredictable condition, wherein the unpredictable condition further comprises:
traffic variation over the link exceeding a second threshold; and/or
occurrence of a link with no resource currently allocated thereto.

12. The method (800) of claim 9 or 10, wherein the group of links can be constituted by:
one or more links served by ANs in an AN cluster, or
one or more links served by an AN, or
one or more links served by a sector of an AN.

13. The method (800) of claim 9 or 10, wherein one or more links in the communication system are divided into one or more groups of links, and wherein the resource allocation template further includes dedicated resource for other groups of links and/or shared resource for at least some of the one or more groups of links.

14. The method (800) of claim 9 or 10, wherein the step (S807) of performing resource scheduling comprises:
configuring another resource allocation template for a subset of the group of links by selecting a subset of dedicated resource for the group of links as dedicated resource for a subset of the group of links and selecting the remaining dedicated resource for the group of links as dedicated resource for other subset of the group of links; and
performing resource scheduling for the respective link in the group of links according to the other resource allocation template.

15. The method (800) of claim 9 or 10, further comprising:
receiving from the control entity an updated resource allocation template for a group of links in the communication system; and
performing resource scheduling for a respective link in the group of links, served by the AN according to the updated resource allocation template.

## Patentansprüche

1. Verfahren (700) in einer Steuereinheit eines Kommunikationssystems zum Zuweisen von Ressource an einen Link zwischen einem Zugangsknoten (access node - AN) in Kommunikation mit der Steuereinheit und einem Endgerät in einer Abdeckung des AN, wobei das Verfahren (700) Folgendes umfasst:
Konfigurieren (S701) einer Ressourcenzuweisungsvorlage für eine Gruppe von Links in dem Kommunikationssystem, wobei die Ressourcenzuweisungsvorlage reservierte Ressource für die Gruppe von Links und dedizierte Ressource für die Gruppe von Links beinhaltet, wobei die reservierte Ressource verwendet wird, um Ressourcenzuweisungserfordernis eines Links in der Gruppe von Links bewirkt durch einen unvorhersehbaren Zustand zu erfüllen, wobei der unvorhersehbare Zustand umfasst, dass Kanalqualitätsverlust erlebt durch den Link in der Gruppe von Links einen ersten Schwellenwert übersteigt, und wobei ein Teilsatz der dedizierten Ressource für die Gruppe von Links dedizierte Ressource für einen Teilsatz der Gruppe von Links ist und die übrige dedizierte Ressource dedizierte Ressource für einen anderen Teilsatz der Gruppe von Links ist; und
Übertragen (S703) der Ressourcenzuweisungsvorlage an einen AN, der zumindest einen Link in der Gruppe von Links bedient.

2. Verfahren (700) nach Anspruch 1, wobei die Ressourcenzuweisungsvorlage gemäß Linkstatusinformationen von jeweiligen Links in der Gruppe von Links in dem Kommunikationssystem konfiguriert sein kann, bei denen Ressourcenkoordination erforderlich ist.

3. Verfahren (700) nach Anspruch 1 oder 2, wobei die reservierte Ressource einem Link in der Gruppe von Links zugewiesen wird, um das Ressourcenzuweisungserfordernis zu erfüllen, das durch den unvorhersehbaren Zustand bewirkt wird, wobei der unvorhersehbare Zustand ferner umfasst, dass Verkehrsvariation über den Link in der Gruppe von Links einen zweiten Schwellenwert übersteigt; und/oder Auftreten eines Links mit keiner aktuell zugewiesenen Ressource.

4. Verfahren (700) nach Anspruch 1 oder 2, wobei die Gruppe von Links aus Folgendem bestehen kann:
einem oder mehreren Links bedient durch ANs in einem AN-Cluster, oder
einem oder mehreren Links bedient durch einen AN, oder
einem oder mehreren Links bedient durch einen Sektor eines AN.

5. Verfahren (700) nach Anspruch 1 oder 2, wobei Links in dem Kommunikationssystem in eine oder mehrere Gruppen von Links geteilt sind, und wobei die Ressourcenzuweisungsvorlage für die Gruppe von Links ferner dedizierte Ressource für andere Gruppen von Links und/oder geteilte Ressource für zumindest einige von der einen oder den mehreren Gruppen von Links beinhaltet.

6. Verfahren (700) nach Anspruch 1 oder 2, wobei das Verfahren (700) gemäß einem Ressourcenzuweisungsvorlagenaktualisierungszyklus durchgeführt wird, innerhalb dessen die Ressourcenzuweisungsvorlage konfiguriert für die Gruppe von Links fest ist.

7. Verfahren (700) nach Anspruch 1 oder 2, wobei die Steuereinheit eine logische Einheit ist, die in einem von ANs implementiert wird.

8. Steuereinheit (1000) in einem Kommunikationssystem zum Angeben von Ressource, die einem Link zwischen einem Zugangsknoten, AN, in Kommunikation mit der Steuereinheit (1000) und einem Endgerät in einer Abdeckung des AN zuzuweisen ist, wobei die Steuereinheit (1000) Folgendes umfasst:
eine Vorlagenkonfigurationseinheit (1010), die konfiguriert ist, um eine Ressourcenzuweisungsvorlage für eine Gruppe von Links in dem Kommunikationssystem zu konfigurieren, wobei die Ressourcenzuweisungsvorlage reservierte Ressource für die Gruppe von Links und dedizierte Ressource für die Gruppe von Links beinhaltet, wobei die reservierte Ressource verwendet wird, um Ressourcenzuweisungserfordernis eines Links in der Gruppe von Links bewirkt durch einen unvorhersehbaren Zustand zu erfüllen, wobei der unvorhersehbare Zustand umfasst, dass Kanalqualitätsverlust erlebt durch den Link in der Gruppe von Links einen ersten Schwellenwert übersteigt, und wobei ein Teilsatz der dedizierten Ressource für die Gruppe von Links dedizierte Ressource für einen Teilsatz der Gruppe von Links ist und die übrige dedizierte Ressource dedizierte Ressource für einen anderen Teilsatz der Gruppe von Links ist; und
eine Übertragungseinheit (1030), die konfiguriert ist, um die konfigurierte Ressourcenzuweisungsvorlage an einen AN zu übertragen, der zumindest einen Link in der Gruppe von Links bedient.

9. Verfahren (800) in einem Zugangsknoten, AN, eines Kommunikationssystems zum Zuweisen von Ressource an einen Link zwischen dem AN in Kommunikation mit einer Steuereinheit und einem Endgerät in einer Abdeckung des AN, wobei das Verfahren (800) Folgendes umfasst:
Empfangen (S805), von der Steuereinheit, einer Ressourcenzuweisungsvorlage für eine Gruppe von Links in dem Kommunikationssystem, wobei die Ressourcenzuweisungsvorlage reservierte Ressource für die Gruppe von Links und dedizierte Ressource für die Gruppe von Links beinhaltet, wobei die reservierte Ressource verwendet wird, um Ressourcenzuweisungserfordernis eines Links in der Gruppe von Links bewirkt durch einen unvorhersehbaren Zustand zu erfüllen, wobei der unvorhersehbare Zustand umfasst, dass Kanalqualitätsverlust erlebt durch den Link in der Gruppe von Links einen ersten Schwellenwert übersteigt, und wobei ein Teilsatz der dedizierten Ressource für die Gruppe von Links dedizierte Ressource für einen Teilsatz der Gruppe von Links ist und die übrige dedizierte Ressource dedizierte Ressource für einen anderen Teilsatz der Gruppe von Links ist; und
Durchführen (S807) von Ressourcen-Scheduling für einen jeweiligen Link in der Gruppe von Links bedient durch den AN gemäß der Ressourcenzuweisungsvorlage.

10. Verfahren (800) nach Anspruch 9, ferner umfassend:
Erhalten (S801) von Linkstatusinformationen von jeweiligen Links in der Gruppe von Links, bei denen Ressourcenkoordination erforderlich ist; und
Melden (S803) der Linkstatusinformationen an die Steuereinheit.

11. Verfahren (800) nach Anspruch 9 oder 10, wobei der Schritt (S807) des Durchführens von Ressourcen-Scheduling das Zuweisen der reservierten Ressource zu einem Link in der Gruppe von Links umfasst, um das Ressourcenzuweisungserfordernis bewirkt durch den unvorhersehbaren Zustand zu erfüllen, wobei der unvorhersehbare Zustand ferner Folgendes umfasst:
Verkehrsvariation über den Link überschreitet einen zweiten Schwellenwert; und/oder
Auftreten eines Links mit keiner aktuell zugewiesenen Ressource.

12. Verfahren (800) nach Anspruch 9 oder 10, wobei die Gruppe von Links aus Folgendem bestehen kann:
einem oder mehreren Links bedient durch ANs in einem AN-Cluster, oder
einem oder mehreren Links bedient durch einen AN, oder
einem oder mehreren Links bedient durch einen Sektor eines AN.

13. Verfahren (800) nach Anspruch 9 oder 10, wobei ein oder mehrere Links in dem Kommunikationssystem in eine oder mehrere Gruppen von Links geteilt sind, und wobei die Ressourcenzuweisungsvorlage ferner dedizierte Ressource für andere Gruppen von Links und/oder geteilte Ressource für zumindest einige von der einen oder den mehreren Gruppen von Links beinhaltet.

14. Verfahren (800) nach Anspruch 9 oder 10, wobei der Schritt (S807) des Durchführens von Ressourcen-Scheduling Folgendes umfasst:
Konfigurieren einer anderen Ressourcenzuweisungsvorlage für einen Teilsatz der Gruppe von Links, indem ein Teilsatz an dedizierter Ressource für die Gruppe von Links als dedizierte Ressource für einen Teilsatz der Gruppe von Links ausgewählt wird und die übrige dedizierte Ressource für die Gruppe von Links als dedizierte Ressource für einen anderen Teilsatz der Gruppe von Links ausgewählt wird; und
Durchführen von Ressourcen-Scheduling für den jeweiligen Link in der Gruppe von Links gemäß der anderen Ressourcenzuweisungsvorlage.

15. Verfahren (800) nach Anspruch 9 oder 10, ferner umfassend:
Empfangen, von der Steuereinheit, einer aktualisierten Ressourcenzuweisungsvorlage für eine Gruppe von Links in dem Kommunikationssystem; und
Durchführen von Ressourcen-Scheduling für einen jeweiligen Link in der Gruppe von Links, bedient durch den AN gemäß der aktualisierten Ressourcenzuweisungsvorlage.

## Revendications

1. Procédé (700) dans une entité de commande d'un système de communication pour attribuer des ressources à une liaison entre un nœud d'accès, AN, en communication avec l'entité de commande et un dispositif terminal dans une couverture de l'AN, le procédé (700) comprenant :
la configuration (S701) d'un modèle d'attribution de ressources pour un groupe de liaisons du système de communication, dans lequel le modèle d'attribution de ressources comprend une ressource réservée pour le groupe de liaisons et une ressource dédiée pour le groupe de liaisons, dans lequel la ressource réservée est utilisée pour satisfaire à l'exigence d'attribution de ressources, d'une liaison du groupe de liaisons, causée par une condition imprévisible, dans lequel la condition imprévisible comprend le fait que la perte de qualité de canal subie par la liaison du groupe de liaisons dépasse un premier seuil, et dans lequel un sous-ensemble de la ressource dédiée pour le groupe de liaisons est une ressource dédiée pour un sous-ensemble du groupe de liaisons et la ressource dédiée restante est une ressource dédiée pour un autre sous-ensemble du groupe de liaisons ; et
la transmission (S703) du modèle d'attribution de ressources à un AN qui dessert au moins une liaison du groupe de liaisons.

2. Procédé (700) selon la revendication 1, dans lequel le modèle d'attribution de ressources peut être configuré conformément aux informations de statut de liaison de liaisons respectives du groupe de liaisons du système de communication parmi lesquelles une coordination des ressources est requise.

3. Procédé (700) selon la revendication 1 ou 2, dans lequel la ressource réservée est attribuée à une liaison du groupe de liaisons pour satisfaire à l'exigence d'attribution de ressources causée par la condition imprévisible, dans lequel la condition imprévisible comprend en outre le fait qu'une variation de trafic sur la liaison du groupe de liaisons dépasse un second seuil ; et/ou l'occurrence d'une liaison sans ressource actuellement attribuée à celle-ci.

4. Procédé (700) selon la revendication 1 ou 2, dans lequel le groupe de liaisons peut se composer :
d'une ou de plusieurs liaisons desservies par des AN dans une grappe d'AN, ou
d'une ou de plusieurs liaisons desservies par un AN, ou
d'une ou de plusieurs liaisons desservies par un secteur d'un AN.

5. Procédé (700) selon la revendication 1 ou 2, dans lequel les liaisons du système de communication sont divisées en un ou plusieurs groupes de liaisons, et dans lequel le modèle d'attribution de ressources du groupe de liaisons comprend en outre une ressource dédiée pour d'autres groupes de liaisons et/ou une ressource partagée pour au moins certains des un ou plusieurs groupes de liaisons.

6. Procédé (700) selon la revendication 1 ou 2, dans lequel le procédé (700) est mis en œuvre conformément à un cycle de mise à jour de modèle d'attribution de ressources, dans lequel le modèle d'attribution de ressources configuré pour le groupe de liaisons est fixe.

7. Procédé (700) selon la revendication 1 ou 2, dans lequel l'entité de commande est une entité logique qui est implémentée dans l'un des AN.

8. Entité de commande (1000) d'un système de communication pour indiquer des ressources à attribuer à une liaison entre un nœud d'accès, AN, en communication avec l'entité de commande (1000) et un dispositif terminal dans une couverture de l'AN, l'entité de commande (1000) comprenant :
une unité de configuration de modèle (1010) configurée pour configurer un modèle d'attribution de ressources pour un groupe de liaisons du système de communication, dans laquelle le modèle d'attribution de ressources comprend une ressource réservée pour le groupe de liaisons et une ressource dédiée pour le groupe de liaisons, dans laquelle la ressource réservée est utilisée pour satisfaire à l'exigence d'attribution de ressources, d'une liaison du groupe de liaisons, causée par une condition imprévisible, dans laquelle la condition imprévisible comprend le fait que la perte de qualité de canal subie par la liaison du groupe de liaisons dépasse un premier seuil, et dans laquelle un sous-ensemble de la ressource dédiée pour le groupe de liaisons est une ressource dédiée pour un sous-ensemble du groupe de liaisons et la ressource dédiée restante est une ressource dédiée pour un autre sous-ensemble du groupe de liaisons ; et
une unité de transmission (1030) configurée pour transmettre le modèle d'attribution de ressources configuré à un AN qui dessert au moins une liaison du groupe de liaisons.

9. Procédé (800) dans un nœud d'accès, AN, d'un système de communication pour attribuer des ressources à une liaison entre l'AN en communication avec une entité de commande et un dispositif terminal dans une couverture de l'AN, le procédé (800) comprenant :
la réception (S805) depuis l'entité de commande, d'un modèle d'attribution de ressources pour un groupe de liaisons du système de communication, dans lequel le modèle d'attribution de ressources comprend une ressource réservée pour le groupe de liaisons et une ressource dédiée pour le groupe de liaisons, dans lequel la ressource réservée est utilisée pour satisfaire à l'exigence d'attribution de ressources, d'une liaison du groupe de liaisons, causée par une condition imprévisible, dans lequel la condition imprévisible comprend le fait que la perte de qualité de canal subie par la liaison du groupe de liaisons dépasse un premier seuil, et dans lequel un sous-ensemble de la ressource dédiée pour le groupe de liaisons est une ressource dédiée pour un sous-ensemble du groupe de liaisons et la ressource dédiée restante est une ressource dédiée pour un autre sous-ensemble du groupe de liaisons ; et
la réalisation (S807) d'un ordonnancement des ressources pour une liaison respective du groupe de liaisons desservies par l'AN conformément au modèle d'attribution de ressources.

10. Procédé (800) selon la revendication 9, comprenant en outre :
l'obtention (S801) d'informations de statut de liaison de liaisons respectives du groupe de liaisons du système de communication parmi lesquelles une coordination des ressources est requise ; et
le signalement (S803) des informations de statut de liaison à l'entité de commande.

11. Procédé (800) selon la revendication 9 ou 10, dans lequel l'étape (S807) de réalisation de l'ordonnancement des ressources comprend l'attribution des ressources réservées d'une liaison du groupe de liaisons pour satisfaire à l'exigence d'attribution de ressources causée par la condition imprévisible, dans lequel la condition imprévisible comprend en outre :
le fait qu'une variation de trafic sur la liaison dépasse un second seuil ; et/ou
l'occurrence d'une liaison sans ressource actuellement attribuée à celle-ci.

12. Procédé (800) selon la revendication 9 ou 10, dans lequel le groupe de liaisons peut être constitué :
d'une ou de plusieurs liaisons desservies par des AN dans une grappe d'AN, ou
d'une ou de plusieurs liaisons desservies par un AN, ou
d'une ou de plusieurs liaisons desservies par un secteur d'un AN.

13. Procédé (800) selon la revendication 9 ou 10, dans lequel une ou plusieurs liaisons du système de communication sont divisées en un ou plusieurs groupes de liaisons, et dans lequel le modèle d'attribution de ressources comprend en outre une ressource dédiée pour d'autres groupes de liaisons et/ou une ressource partagée pour au moins certains des un ou plusieurs groupes de liaisons.

14. Procédé (800) selon la revendication 9 ou 10, dans lequel l'étape (S807) de réalisation de l'ordonnancement des ressources comprend :
la configuration d'un autre modèle d'attribution de ressources pour un sous-ensemble du groupe de liaisons en sélectionnant un sous-ensemble de ressource dédiée pour le groupe de liaisons en tant que ressource dédiée pour un sous-ensemble du groupe de liaisons et la sélection de la ressource dédiée restante pour le groupe de liaisons en tant que ressource dédiée pour un autre sous-ensemble du groupe de liaisons ; et
la réalisation de l'ordonnancement des ressources pour la liaison respective du groupe de liaisons conformément à un modèle d'attribution de ressources.

15. Procédé (800) selon la revendication 9 ou 10, comprenant en outre :
la réception depuis l'entité de commande d'un modèle d'attribution de ressources mis à jour pour un groupe de liaisons du système de communication ; et
la réalisation d'un ordonnancement des ressources pour une liaison respective du groupe de liaisons, desservies par l'AN conformément au modèle d'attribution de ressources mis à jour.
